# EUROPÄISCHE PATENTSCHRIFT

(11) **EP 2 314 404 B1**
(45) Veröffentlichungstag und Bekanntmachung des Hinweises auf die Patenterteilung: **20.06.2012**
(21) Anmeldenummer: 09173800.5
(22) Anmeldetag: 22.10.2009
(51) Int. Cl.: B23F 5/06, B23F 19/00

(54) **Verfahren zur Hart-Feinbearbeitung der Zahnflanken eines Zahnrades**
Method for hard fine processing of the tooth flanks of a gear wheel
Procédé de traitement précis et dur des flancs de dents d'une roue dentée

(43) Veröffentlichungstag der Anmeldung: 27.04.2011
(73) Patentinhaber: Klingelnberg AG, 8050 Zürich (CH)
(72) Erfinder: Müller, Hartmuth, 42857, Remscheid (DE)
(74) Vertreter: OK pat AG

(56) Entgegenhaltungen:
- DE-A1- 10 027 011
- DE-A1- 19 829 880
- DE-C1- 3 734 828
- DE-U1-202009 009 138

## Beschreibung

### Gebiet der Erfindung

Gegenstand der Erfindung ist ein Verfahren zur Hart-Feinbearbeitung einer vorgefertigten Zahnflanke eines Zahnrades.

### Hintergrund der Erfindung, Stand der Technik

Bei der Fertigung von Zahnrädern unterscheidet man typischerweise zwischen der sogenannten Weichbarbeitung und der Hartbearbeitung. Die Weichbearbeitung erfolgt vor dem Härten des Werkstücks. Das Hartbearbeiten erfolgt hingegen nach dem Härten.

Nach der Weichbearbeitung können sich durch das anschliessende Härten Härteverzüge ergeben. Um die gewünschten Geometrie, Kontakteigenschaften und Oberflächenqualitäten erzielen zu können, werden solche Zahnräder daher häufig im Harten nachbearbeitet.

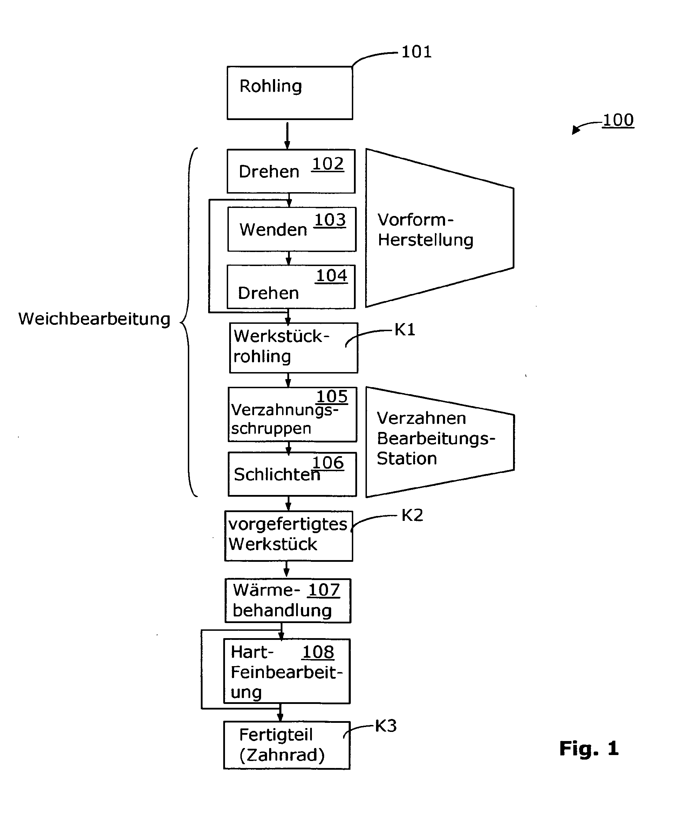

Fig. 1 zeigt eine schematische Darstellung eines beispielhaften Verfahrensablaufs 100. Es handelt sich um ein allgemeines Beispiel für die Bearbeitung eines Zahnrades. Ausgehend von einem Rohling (Box 101) werden in dem gezeigten Beispiel folgende Weichbearbeitungsschritte durchgeführt. Es kann zum Beispiel eine (Zentral-) Bohrung durch Drehen (Box 102) erzeugt werden. Dann kann der Rohling zur weiteren Bearbeitung gewendet werden (Box 103). Nach dem Wenden kann eine erneute Drehbearbeitung folgen (Box 104). Diese Schritte sind optional und werden hier auch als Vorform-Herstellung bezeichnet. Im Rahmen der Vorform-Herstellung können auch andere Schritte oder alternative Schritte ausgeführt werden. Am Ende der Vorform-Herstellung wird das Werkstück als Radrohling oder Werkstückrohling K1 bezeichnet. Der Schritt 102 oder die Schritte 102 - 104 können zum Beispiel in einer sogenannten Vorbearbeitungsmaschine oder in mehreren verschiedenen Maschinen ausgeführt werden.

Nun folgt typischerweise das sogenannte Verzahnen. Im Rahmen einer Verzahnungsbearbeitung wird beim Verzahnungsschruppen (Box 105) mit einem Schruppwerkzeug eine vordefinierte Anzahl von Zahnlücken am Kegelradrohling K1 in der ungefähren Position und mit ungefähren Aufmassen herausgearbeitet. Dann kann der optionale Schritt des Verzahnungsschlichtens (Box 106) folgen, der mit einem Schlichtwerkzeug ausgeführt wird und der durch die Schlichtbearbeitung den Zahnlücken, respektive den angrenzenden Zahnflanken, die gewünschte Form mit der vorgegebenen Genauigkeit gibt. Man kann aber auch mit nur einem Schritt (statt der beiden Schritte 105 und 106) die Zahnflanken heraus arbeiten.

Die Schritte 105 und 106 können z.B. in ein und derselben Maschine oder Bearbeitungsstation ausgeführt werden. Der Werkstückrohling K1 muss dann also nicht umgespannt oder transferiert werden.

Die bisherigen Schritte werden als Weichbearbeitung bezeichnet, wie in Fig. 1 angedeutet.

Anschliessend folgt typischerweise eine Wärmebehandlung (Box 107) des vorgefertigten Werkstücks K2. Diese Wärmebehandlung zählt typischerweise nicht mehr zur Weichbearbeitung. Sie dient dazu das vorgefertigte Werkstück K2 zu härten. Dann folgt die erwähnte Nachbearbeitung (Box 108). Bei der Nachbearbeitung, die hier auch als Hart-Feinbearbeitung bezeichnet wird, erfolgt eine Hartbearbeitung der Verzahnung. Dann ist das Zahnrad K3 fertig.

Bei der Hartbearbeitung kommen heute teilweise Fingerfräser oder kugelkopfartige Fräser zum Einsatz, die langsam über die nachzubearbeitenden Oberflächen der vorgefertigten Zahnflanken geführt werden. Untersuchungen zeigen, dass die Oberflächen, die so nachbearbeitet wurden, unter Umständen deutliche Bearbeitungsspuren aufweisen und ein schlechtes Tragbild haben können. Dies ist vor allem dann der Fall, wenn für das Nachbearbeiten nicht genügend Zeit zur Verfügung steht und/oder wenn das Werkzeug zu schnell über die nachzubearbeitenden Zahnflanken geführt wird. Es kann z.B. auch zu hydrodynamischen Schmierungsproblemen kommen, wenn zwei Zahnräder, die so nachbearbeitet wurden, als Zahnradpaar zum Einsatz kommen. DE3734828C1 offenbart ein Verfahren zum Wälzschleifen der Zahnflanken von Zahnrädern, wobei eine rotierende Schleifscheibe Vorschubbewegungen entlang der Zahnstirnseiten durchführt, um Korrekturen auf der Zahnflanke zu erzeugen.

Aufgabe der vorliegenden Erfindung ist es daher, ein Verfahren zur Hart-Feinbearbeitung einer vorgefertigten Zahnflanke eines Zahnrades bereitzustellen, das ein besseres Tragbild oder bessere Oberflächeneigenschaften der Zahnflanken gewährleistet und das sich durch eine gute Produktivität auszeichnet.

### Zusammenfassung der Erfindung

Diese Aufgabe wird gemäß der vorliegenden Erfindung durch ein Verfahren zur Hart-Feinbearbeitung einer vorgefertigten Zahnflanke gemäß Anspruch 1 gelöst. Dieses Verfahren kommt auf einer Maschine zum Einsatz, die mindestens fünf koordiniert gesteuerte Achsen und eine zusätzliche Werkzeugachse aufweist. Gemäss Erfindung wird ein rotationssymmetrisches Werkzeug, vorzugsweise ein Fingerfräser oder ein Schleifstift, in eine Rotation um die Werkzeugachse versetzt. Eine oder mehrere der fünf koordiniert gesteuerten Achsen werden so angesteuert, dass ein geradliniger Abschnitt der Mantellinie des Werkzeugs in einer Erzeugungsbewegung tangential in mehreren Spuren entlang der Zahnflanke geführt wird während das zylindrische Werkzeug durch die Rotation um die Werkzeugachse an der vorgefertigten Zahnflanke Material abhebt.

Vorzugsweise wird das Werkzeug entlang von Spuren geführt, die den sogenannten Wälz-Iso-Linien entsprechen oder die diesen Wälz-Iso-Linien angenähert sind.

Das erfindungsgemässe Verfahren ist speziell für die Bearbeitung von Zahnflanken nach einem Härteprozess, also im harten Zustand, ausgelegt. Entsprechend sind die Werkzeuge auszuwählen, die zum Einsatz kommen. Das entsprechende Verfahren wird daher als Hartbearbeitung bezeichnet. Da es hier um die Überarbeitung, bzw. Nachbearbeitung bereits vorgefertigter Zahnflanken geht, wird das Verfahren auch als Hart-Feinbearbeitung bezeichnet.

Der wichtigste Vorteil des erfinderischen Verfahrens wird darin gesehen, dass eine vollständige Beseitigung der aus der Wärmebehandlung verbliebenen Härteverzüge gewährleistet wird, wobei genau definierte Trageigenschaften und hervorragende Oberflächenqualitäten erzielt werden können, was sich positiv auf Lebensdauer und Laufruhe der entsprechend bearbeiteten Zahnräder auswirkt. Der Einsatz der vorliegenden Erfindung kann auch einen positiven Einfluss auf die hydrodynamische Schmierung haben, wenn zwei Zahnräder, die nach der Erfindung nachbearbeitet wurden, miteinander gepaart werden.

### ZEICHNUNGEN

Weitere Einzelheiten und Vorteile der Erfindung werden im Folgenden anhand von Ausführungsbeispielen und mit Bezug auf die Zeichnung beschrieben. Es zeigen:
- **FIG. 1**: ein allgemeines Schema für die Bearbeitung von Zahnrädern;
- **FIG. 2A**: eine perspektivische Ansicht des Zahnes eines Zahnrads und eines erfindungsgemäss geführten Werkzeugs in schematischer Darstellung;
- **FIG. 2B**: eine Draufsicht des Zahnes und des Werkzeugs nach Fig. 2A in schematischer Darstellung;
- **FIG. 3**: eine schematische Ansicht des Zahnes eines Zahnrads und eines erfindungsgemäss geführten Werkzeugs in schematischer Darstellung, wobei das Werkzeug so geführt ist, dass seine Rotationsachse senkrecht steht zu den Erzeugungsbahnen;
- **FIG. 4**: eine schematische Ansicht des Zahnes eines Zahnrads und eines erfindungsgemäss geführten Werkzeugs in schematischer Darstellung, wobei das Werkzeug schiebend so geführt ist, dass seine Rotationsachse zu den Erzeugungsbahnen einen Winkel einschliesst, der grösser ist als 90 Grad;
- **FIG. 5**: eine schematische Ansicht des Zahnes eines Zahnrads und eines erfindungsgemäss geführten Werkzeugs in schematischer Darstellung, wobei das Werkzeug ziehend so geführt ist, dass seine Rotationsachse zu den Erzeugungsbahnen einen Winkel einschliesst, der kleiner ist als 90 Grad;
- **FIG. 6**: eine schematische Ansicht eines Zahnrads mit veränderlicher Zahnhöhe und eines erfindungsgemäss geführten Werkzeugs in schematischer Darstellung, wobei das Werkzeug ziehend geführt ist;
- **FIG. 7A**: eine schematische Ansicht eines geradverzahnten Kegelrads mit konstanter Zahnhöhe, wobei die Wälz-Iso-Linien dargestellt sind;
- **FIG. 7B**: eine schematische Ansicht eines geradverzahnten Kegelrads mit veränderlicher Zahnhöhe, wobei die Wälz-Iso-Linien dargestellt sind;
- **FIG. 8**: eine perspektivische Ansicht des Grundkörpers eines Werkzeugs zur Durchführung des erfindungsgemässen Verfahrens mit zylindrischer Grundform in schematischer Darstellung;
- **FIG. 9**: eine perspektivische Ansicht eines Werkzeugs zur Durchführung des Verfahrens mit kegelstumpfförmigem Grundkörper in schematischer Darstellung;
- **FIG. 10**: eine Ansicht eines weiteren Werkzeugs zur Durchführung des erfindungsgemässen Verfahrens mit zylindrischem Grundkörper in schematischer Darstellung;
- **FIG. 11**: eine Vorderansicht des balligen Zahnes eines geradverzahnten Zahnrads und eines erfindungsgemäss geführten Werkzeugs in schematischer Darstellung, wobei das Werkzeug überkreuz geführt wird;
- **FIG. 12**: eine perspektivische Ansicht einer Portalmaschine, auf der die Erfindung zum Einsatz kommen kann.

### DETAILLIERTE BESCHREIBUNG

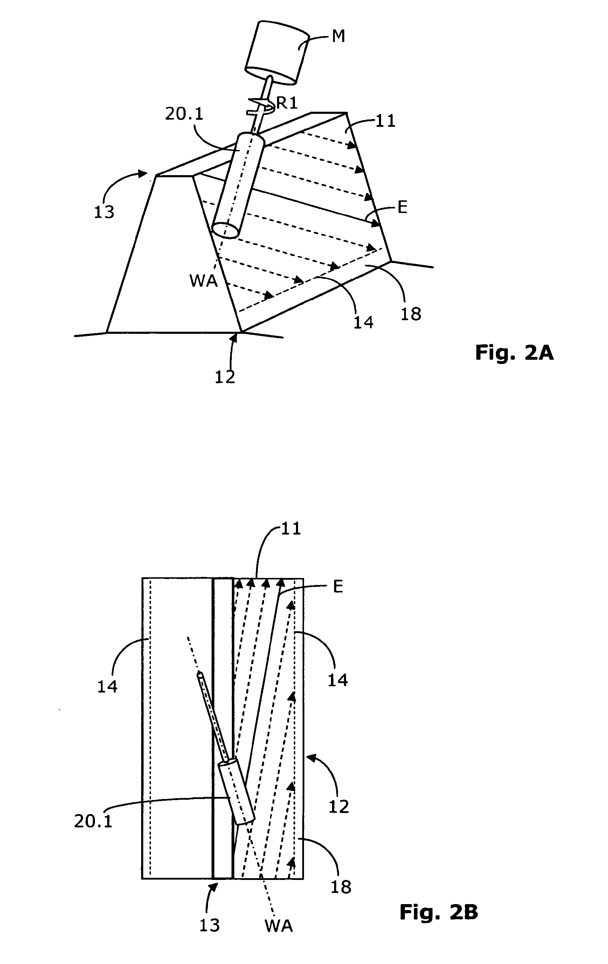

Das erfindungsgemässe Verfahren zur Hart-Feinbearbeitung einer vorgefertigten Zahnflanke 11 eines Zahnrades 10 wird im Folgenden unter Bezugnahme auf die Figuren 2A und 2B beschrieben. Fig. 2A zeigt eine vereinfachte perspektivische Ansicht eines einzelnen Zahnes eines geradverzahnten Zahnrads, d.h. er weist keine Krümmung der Zahnflankenlinie auf. Es handelt sich um eine stark schematisierte Darstellung eines Zahnes mit geradem Zahnprofil. In der Praxis haben solche Zähne häufig ein Zahnprofil (z.B. ein evolventisches Zahnprofil), das gekrümmt ist. Der Zahn hat eine rechte Zahnflanke 11, die hier sichbar ist. Der Zahn hat eine konstante Zahnhöhe. Die linke (rückwärtige) Zahnflanke ist nicht sichtbar. In Fig. 2A ist zu erkennen, dass ein rotationssymmetrisches Werkzeug 20.1 (hier mit einem zylindrischen Grundkörper), vorzugsweise ein Zylinderfräser oder Schleifstift, in eine Rotation R1 um die Werkzeugachse WA versetzt wird. Diese Rotation R1 wird durch einen Motor M erzeugt, der zum Beispiel in einer Spindel oder in der Maschine 100 (nicht gezeigt) sitzt. Der Motor M ist hier stark vereinfacht dargestellt. Bei der in Fig. 2A gezeigten Situation mit geradem Profil handelt es sich um einen Sonderfall bei dem das Werkzeug 20.1 die Flanke 11 über die gesamte Länge berührt, während im Normalfall eines gekrümmten Profils das Werkzeug 20.1 nur über einen Abschnitt, dessen Länge von der Zustellung auf die Flanke abhängt, berührt.

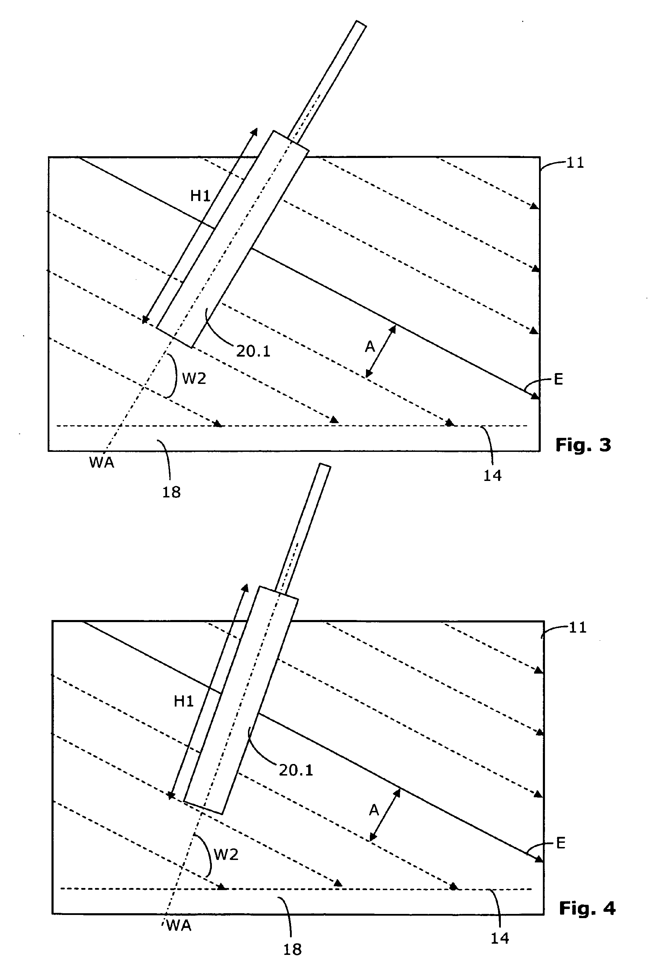

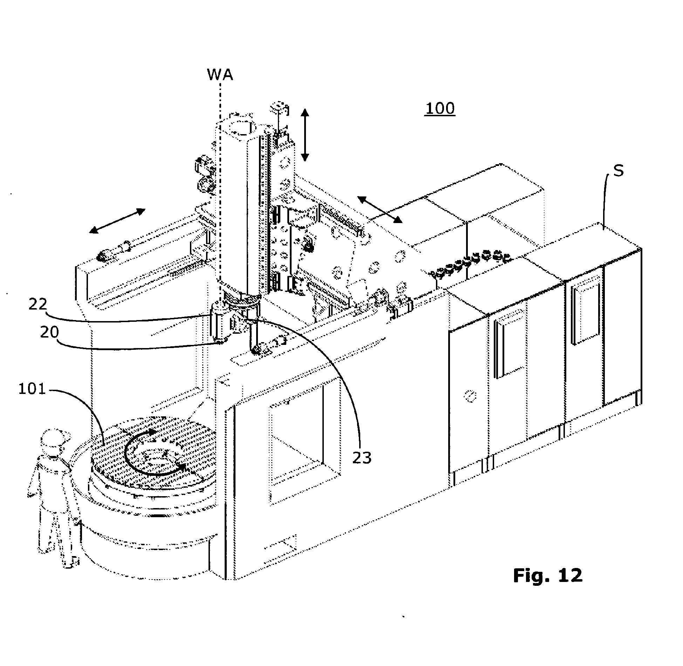

Bei der Maschine 100 handelt es sich um eine Maschine (wie z.B. in Fig. 12 gezeigt), die mindestens fünf koordiniert gesteuerte Achsen und die zusätzliche Werkzeugachse WA aufweist. Eine oder mehrere der fünf koordiniert gesteuerten Achsen werden nun so angesteuert (z.B. von einer NC-Steuerung S der Maschine 100), dass eine geradlinige Mantellinie (auch geradliniger Längenabschnitt genannt) des Werkzeugs 20.1 mit zylindrischem Grundkörper (hier auch zylindrisches Werkzeug 20.1 genannt) in einer Erzeugungsbewegung tangential entlang der Zahnflanke 11 geführt. Details hierzu sind z.B. den schematischen Figuren 3 bis 6 oder den Figuren 7A, 7B zu entnehmen. Die Erzeugungsbewegung ist in den Figuren durch eine Vektorenschar E dargestellt. Die Erzeugungsbewegung wird ausgeführt während das rotationssymmetrische Werkzeug 20.1 um die Werkzeugachse WA rotiert. Durch die Rotation R1 um die Werkzeugachse WA wird an der vorgefertigten Zahnflanke 11 Material abgehoben, d.h. es kommt zu einer spanabhebenden Nachbearbeitung der Zahnflanke 11. Da jeweils mindestens ein geradliniger Längenabschnitt des Werkzeugs 20.1 tangential an der zu bearbeitenden Fläche der Zahnflanke 11 anliegt, kommt es bei der Bearbeitung zu einem stück- oder abschnittsweisen Linienkontakt. Die Größe des stück- oder abschnittsweisen Linienkontakts wird bestimmt von der Zustellung auf die Flanke, von den Bearbeitungsschritten, die vorausgegangen sind (z.B. das Verzahnungsschruppen mit einem Wälzfräser) und von der Form des Grundkörpers der Werkzeugs. Die vorausgegangenen Bearbeitungsschritte haben immer einen Einfluss auf die Oberflächenbeschaffenheit der Zahnflanke. Ein Schnitt durch die Zahnflanke ist aufgrund der vorausgegangenen Bearbeitungsschritte eigentlich immer ein Polygonzug, wobei der Abstand der einzelnen Punkte des Polygonzugs durch den Vorschub (beim Wälzfräsen durch den Wälzvorschub) bestimmt wird. Wenn ein sogenanntes Profilschleifen (Formschleifen) eingesetzt wird, dann muss es sich jedoch nicht um einen Polygonzug handeln.

In Fig. 2A und 2B sind die Erzeugungsbewegungen durch die Vektoren E dargestellt, die schräg entlang der Zahnflanke 11 verlaufen. Der durchgezogene Vektor E zeigt die momentane Bewegunsgrichtung und Erzeugungsbewegung des Werkzeugs 20.1. Die anderen Erzeugungsbewegungsbahnen sind durch die gestrichelten Vektoren dargestellt.

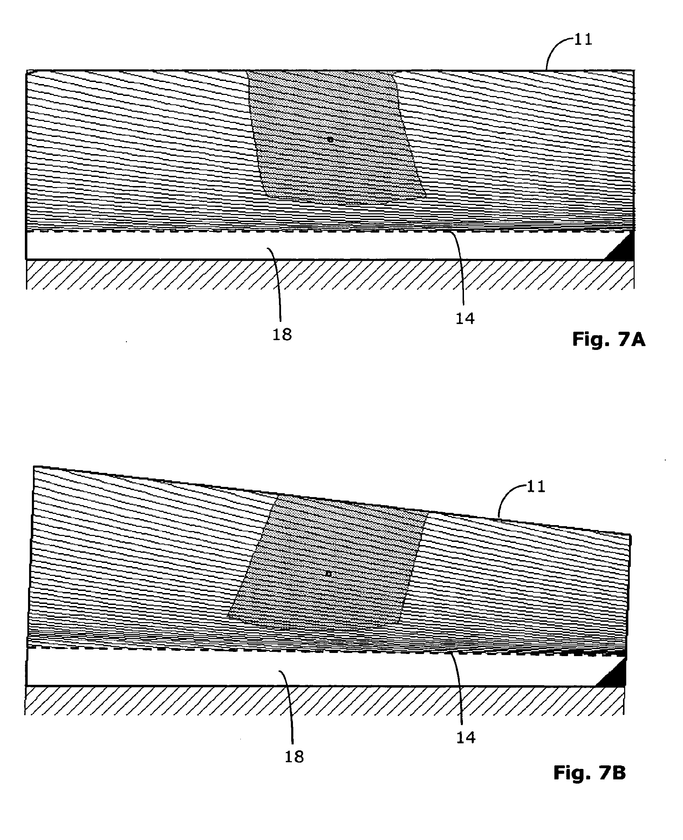

Es sei angemerkt, dass in der Praxis die Erzeugungsbewegungsbahnen deutlich enger nebeneinander liegen als hier in den Figuren 2A, 2B, 3, 4, 5, 6 und 11 gezeigt (d.h. die Abstände A sind deutlich kleiner, wie z.B. in den Figuren 7A und 7A zu erkennen ist). Ausserdem ist der Verlauf und die Form der Erzeugungsbewegungsbahnen vorzugsweise analog zu den Wälz-Iso-Linien, die sich bei einer Wälzbearbeitung ergeben würden, wie z.B. in den Figuren 7A und 7A gezeigt. Diese Erzeugungsbewegungsbahnen können gekrümmt sein. Bei den Wälz-Iso-Linien handelt es sich um Verbindungslinien von Punkten, die mit dem gleichen Wälzwinkel erzeugt werden.

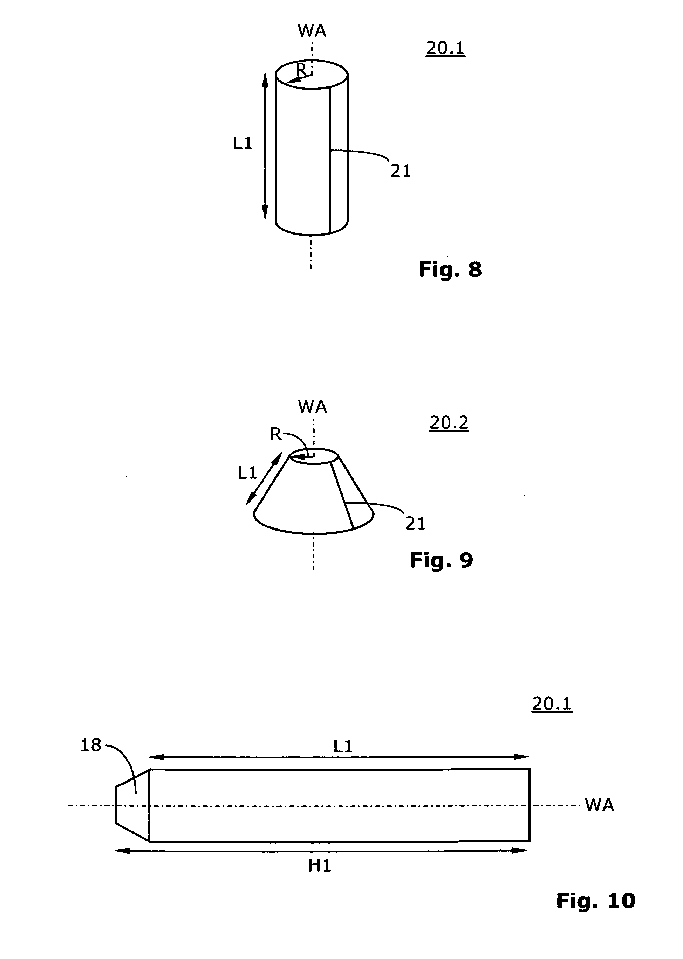

Der entsprechende Bewegungsverlauf des Werkzeugs 20.1 ergibt sich nun wie folgt. Es wird eine Maschineneinstellung gewählt, bei der die Achse WA so in Bezug zur idealisierten Zahnflanke 11 geneigt ist, dass mindestens ein kurzer geradliniger Längenabschnitt des Werkzeugs 20.1 tangential zur Zahnflanke 11 liegt. Für ein kegelstumpfförmiges Werkzeug 20.2 (d.h. für ein Werkzeug 20.2 mit kegelstumpfförmigem Grundkörper z.B. nach Fig. 9) kann eine entsprechend andere Winkeleinstellung gewählt werden. Der Anstellwinkel kann beim Einsatz eines Werkzeugs 20.2 dem Winkel zwischen der Mantellinie 21 des Kegelstumpfs und der Kegelachse entsprechen, die hier der Werkzeugachse WA entspricht.

Besonders bevorzugt sind Werkzeuge 20, deren geradliniger Abschnitt relativ lang ist im Verhältnis zum Durchmesser. Vorzugsweise ist das Verhältnis zwischen der effektiv wirksamen Länge L1 und dem Radius R grösser als 5, d.h. L/R > 5. Es handelt sich somit vorzugsweise um ein Werkzeug 20.1 mit einem länglichen schlanken Grundkörper gemäss Fig. 8. Ein solches Werkzeug hat den Vorteil, dass es problemlos in die Zahnlücke zwischen benachbarten Zähnen eingeführt werden kann, wenn der Anstellwinkel ausreichend steil gewählt wird, d.h. wenn das Werkzeug 20.1 eher steil geführt wird, wie z.B. in Fig. 4 angedeutet.

Je nach Art der Maschineneinstellung können die Abstände A (siehe Figuren 2A, 2B, 3, 4, 5, 6 und 11) benachbarter Erzeugungsbahnen einen etwas grösseren oder kleineren Abstand A haben. Vorzugsweise ist der Abstand A zweier direkt benachbarter Erzeugungsbahnen (respektive der entsprechenden Vektoren E) kleiner als die effektiv wirksame Länge der Mantellinie des Werkzeugs 20. In Fig. 3 ist eine Situation gezeigt, bei der die Mantelfläche des Grundkörpers des Werkzeugs 20.1 ein idealer Zylinder ist und bei der die effektiv wirksame Länge L1 der Mantellinie der Höhe H1 des Zylinders des zylinderförmigen Werkzeugs 20.1 entspricht, d.h. L1=H1. Der Abstand A beträgt vorzugsweise zwischen 0,2 * L1 und 0,8 * L1. Diese Abgaben gelten nur falls das Zahnprofil gerade ist und falls die Zahnflankenlinie gerade ist. Bei dem in Fig. 3 gezeigten Beispiel beträgt der Abstand A ca. 0,25 * L1.

Nicht nur die effektiv wirksame Länge L1 der Mantellinie und die Zahnflankenlinie sowie das Zahnprofil können einen Einfluss auf den Abstand A haben. Die Wahl des Ausrichtungswinkels W2 kann auch bei der Festlegung des Abstandes A Berücksichtigung finden. Vorzugsweise wird folgende Regel angewendet. Wenn der Ausrichtungswinkel W2 grösser oder kleiner ist als 90 Grad, dann wird der Abstand A proportional zu dem Sinus des Ausrichtungswinkels W2 verkleinert. Es kann zum Beispiel der folgende Ansatz gelten: A = L1 * (sin W2).

Diese mathematischen Zusammenhänge führen, wenn sie angewendet werden, zu vorteilhaften Ergebnissen was die Oberflächenqualität einerseits und die erforderliche Bearbeitungszeit andererseits betrifft. Die entsprechenden Regeln sind jedoch optional. Man kann eine Maschine 100 auch mit konstanten Abständen A betreiben. Es ist auch möglich, dass der Abstand A eine Funktion der momentanen Position des Werkzeugs 20 auf der Zahnflanke 11 ist. Die Vektoren E, die die Erzeugungsbewegungen darstellen, können parallel verlaufende (d.h. der Abstand A ist überall gleich) Linien sein. Die Vektoren E können aber auch gekrümmt sein und sie müssen nicht parallel sein (analog zu den Wälz-Iso-Linien).

Beim Festlegen der Erzeugungsbewegungen, respektive der entsprechenden 3-dimensionalen Bewegungsbahnen, entlang denen das Werkzeug 20 durch ein entsprechendes Zusammenspiel der Achsen der Maschine 100 bewegt wird, wird die Zahngeometrie berücksichtigt. Dabei werden neben der Zahnflankenlinie und dem Profilverlauf auch Flankenmodifikationen und andere Aspekte berücksichtigt, welche die Flanke 11 in ihrer Gesamtheit im 3-dimensionalen Raum festlegen. Wenn die Flanke 11 zum Beispiel ballig ist, dann müssen maschinenseitig die 3-dimensionalen Bewegungsbahnen (hier durch die Verktoren E repräsentiert) entsprechend angepasst werden. Entsprechende Anpassungen sind z.B. auch notwendig bei Zähnen mit veränderlichen Zahnhöhe und/oder bei den Zähnen eines schräg- oder spiralverzahnten Zahnrads.

Um so kleiner der Abstand A ist, um so genauer kann die Oberfläche der Zahnflanke 11 nachbearbeitet werden. Eine dichte Anordnung der Erzeugungsbewegungen (was gleichbedeutend ist mit einem kleinen Abstand A) bedeutet aber, dass das Werkzeug 20 häufiger entlang der Oberfläche geführt werden muss als bei einem grösseren Abstand A der Erzeugungsbewegungen. Um so häufiger das Werkzeug 20 entlang bewegt werden muss, um so länger ist die Nachbearbeitungszeit.

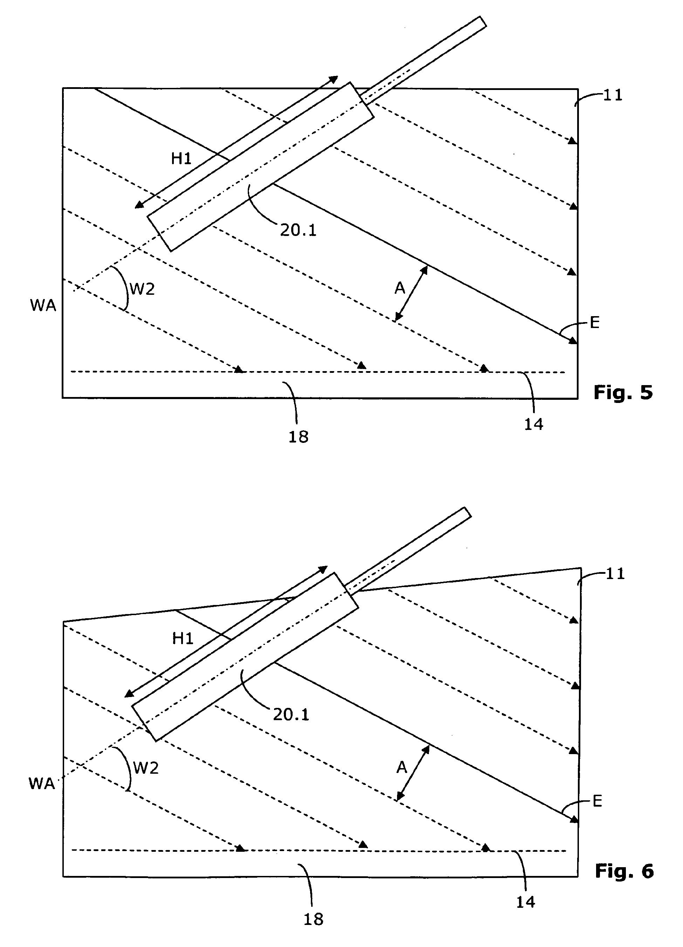

Neben der Vorgabe des Anstellwinkels der Werkzeugachse WA, der unter anderem von der Form des Grundkörpers des Werkzeugs 20 abhängt, kann auch vorgebenen werden, ob das Werkzeug 20 in einer senkrechten Ausrichtung (wie in Fig. 3 gezeigt), in einer schiebenden Ausrichtung (wie in Fig. 4 gezeigt), oder in einer gezogenen Ausrichtung (wie in Fig. 5 gezeigt) über die zu bearbeitende Zahnflanke 11 geführt wird. Bei der senkrechten Ausrichtung nach Fig. 3 beträgt der Ausrichtungswinkel W2 90 Grad, bei der schiebenden Ausrichtung nach Fig. 4 beträgt der Ausrichtungswinkel W2 zwischen 90 und 135 Grad und bei der gezogenen Ausrichtung nach Fig. 5 beträgt der Ausrichtungswinkel W2 zwischen 90 und 45 Grad.

In den Figuren ist durch eine gestrichelte Linie 14 angedeutet, dass die Zahnflanke im Fussbereich, d.h. nahe dem Zahnfuss 12, einen Bereich hat, der nicht mit dem Werkzeug 20 nachbearbeitet wird. Die gestrichelte Linie 14 definiert den Übergang zum Zahnfussbereich 18. Dieser Übergang ist fliessend.

Die in den Figuren 2A, 2B, 3, 4, 5, 7A und 11 gezeigten Zähne haben alle eine konstante Zahnhöhe. Die Erfindung lässt sich aber problemlos auch auf andere kompliziertere Zahnflanken anwenden. Im Allgemeinen sind die Zahnflanken in Richtung der Flankenlängslinie und in Profilrichtung gekrümmt, wie erwähnt. Die NC-Steuerung S muss dann so programmiert werden, dass die Vektoren E entsprechend angepasst sind.

Die Maschine 100 umfasst eine Steuerung S, die Steuersignale erzeugt, um das Werkzeug 20; 20.1, 20.2 tangential anzustellen und um die Erzeugungsbewegung auszuführen.

Die Erfindung lässt sich besonders vorteilhaft für die Nachbearbeitung der Zahnflanken von Kegelrädern einsetzen. In Fig. 7A ist die Flanke 11 eines geradverzahnten Kegelrads mit konstanter Zahnhöhe gezeigt. In Fig. 7B ist die Flanke 11 eines geradverzahnten Kegelrads mit veränderlichen Zahnhöhe gezeigt. Der Fusskegelwinkel ist hier kleiner als der Kopfkegelwinkel. Das zuvor Beschriebene gilt hier analog.

Die Erfindung lässt sich auf Zahnräder mit konstanter oder mit veränderlicher Zahnhöhe anwenden. Sie lässt sich generell auch anwenden auf geradverzahnte, schrägverzahnte und spiralverzahnte Zahnräder.

In einer besonders bevorzugten Ausführungsform der Erfindung folgt die Erzeugungsbewegung geraden oder leicht gekrümmten, vorzugsweise parallel zueinander verlaufenden Vektoren E. Vorzugsweise werden diese Vektoren E rechnerisch so ermittelt, dass sie z.B. den virtuellen Messerspuren eines Stabmesserkopfs angenähert sind (wobei sie dann nicht unbedingt parallel verlaufen müssen), die beim Erzeugen der entsprechenden Zahnflanke mittels Wälzfräsen entstehen würden. Beim Wälzfräsen vollzieht der Stabmesserkopf nicht nur eine Rotationsbewegung um seine Rotationsachse (Messerkopfachse genannt) sondern er wird auch um eine Wälzwiegenachse geführt. Die Wälzwiegenachse entspricht der Planradachse des virtuellen Planrads, das zur mathematischen Definition des entsprechenden Kegelrads herangezogen wird.

In der Mathematik werden Flächen dann als konjugierte Flächen bezeichnet, wenn sich sich entlang einer Linie berühren. Gemäss Erfindung wird das Werkzeug 20 stets so entlang der Zahnflanke 11 geführt, was durch eine geeignet Steuerung der Achsen der Maschine 100 erfolgt, dass mindestens jeweils ein kurzer Abschnitt (hier effektiv wirksame Länge L1 genannt) der Mantellinie des rotaionssymmetrischen Werkzeugs 20 zu einem kurzen Abschnitt der Flankenfläche konjugiert ist. Durch das tangentiale Führen des Werkzeugs 20 entlang der Flankenfläche wird die Konjunktion gewährleistet. Durch diese Konjunktion kommt es zu einer spanabhebenden Nachbearbeitung im unmittelbaren Bereich der effektiv wirksamen Länge L1 des Werkzeugs 20. Es ergibt sich bei einer mikroskopischen Betrachtung einer erfindungsgemäss nachbearbeiteten Zahnflanke 11 eine Flankenfläche, die sich im einem Schnitt senkrecht zu den Vektoren E der Erzeugungsbewegungsbahnen als Polygonenzug beschreiben lässt. Nach der Bearbeitung mit dem Werkzeug 20 in der beschriebenen Art und Weise ergibt sich ein Polygonenzug P, der sich aus mehreren geraden Liniensegmenten und/oder gekrümmten Abschnitten zusammensetzt.

In Fig. 10 ist die schematische Ansicht eines anderen Werkzeugs 20.1 mit länglichem zylinderförmigem Grundkörper gezeigt. Dieses Werkzeug 20.1 hat eine Höhe H1. Die effektiv wirksame Länge L1 ist kürzer, da der Kopfbereich 18 des Werkzeugs kegelstumpfförmig zurückgenommen ist oder eine Kopffase aufweist. Analog kann natürlich auch ein kegelstumpfförmiges Werkzeug 20.2 eine Höhe H1 aufweisen, die grösser ist als die effektiv wirksame Länge L1.

Der Begriff rotationssymmetrisches Werkzeug 20 wird hier verwendet, um ein Werkzeug 20 zu definieren, dessen Grundkörper entweder eine kreiszylindrische Form (siehe z.B. Fig. 8) oder eine Kegelstumpfform (siehe z.B. Fig. 9) hat. In den Figuren 2A, 2B, 3, 4, 5, 6, 8, 10 und 11 sind kreiszylindrische Werkzeuge 20.1 gezeigt. In Fig. 9 ist ein kegelstumpfförmiges Werkzeug 20.2 gezeigt. Die Beschreibung der Ausführungsformen der Figuren 2A, 2B, 3, 4, 5, 6, 8, 10 und 11 lässt sich entsprechend auf das kegelstumpfförmige Werkzeug 20.2 anwenden, wobei lediglich der Anstellwinkel entsprechend des Kegelwinkels des Werkzeugs 20.2 gewählt werden muss.

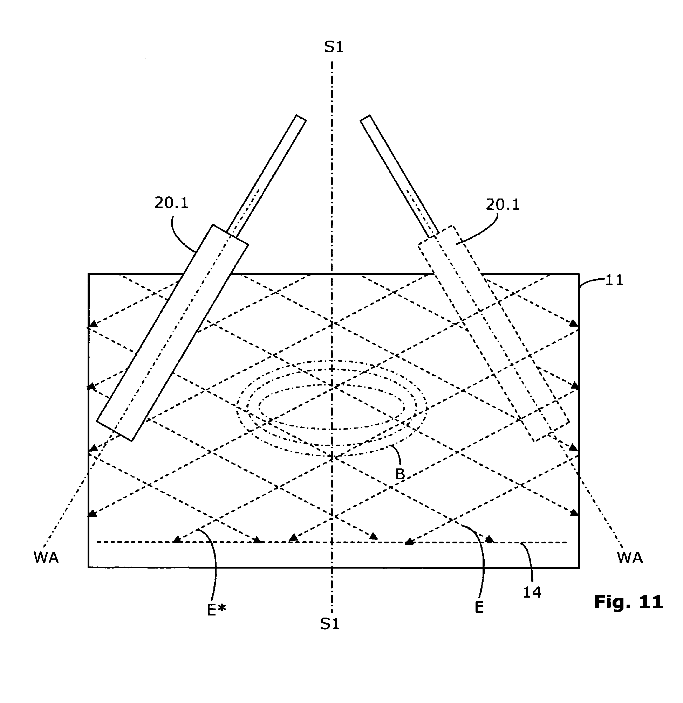

Bei Zahnflanken 11, die zum Beispiel eine Balligkeit B aufweisen, wird das Werkzeug 20 vorzugsweise entlang Vektoren E geführt, die einander kreuzen. Diese Prinzip ist in Fig. 11 angedeutet. Die Balligkeit B ist in Fig. 11 durch Ellipsen angedeutet. Das Werkzeug 20 kann entlang einer Spiegelebene S1-S1 geklappt werden, bevor es entlang von Vektoren E* geführt wird, die die anderen Vektoren E kreuzen.

Dadurch ergeben sich verbesserte Oberflächeneigenschaften aber gleichzeitig wird auch die Nachbearbeitungszeit länger.

Es geht hier hauptsächlich um rotationssymmetrische Werkzeuge, die einen Rotationskörper (rotationssymmetrischen Grundkörper) haben dessen Mantelfläche durch eine gerade Linie 21 (Erzeugende genannt) erzeugt wurde. Anstelle eines Kegelstumpfs kann auch eine Hyperboloide zum Einsatz kommen. Ein Abschnitt des Werkzeugs liegt während des Bearbeitung mindestens teilweise tangential an dem zu bearbeitenden Werkstück an.

Vorzugsweise kommen bei den verschiedenen Ausführungsformen Fräswerkzeuge 20 zum Einsatz. Fräsen bezeichnet hier das spanabhebende Bearbeiten von Metallen. Es kann sich bei den Werkzeugen 20 um Fräser handeln, die schleifend eingesetzt werden, oder es kann sich um Fräser handeln, die Schneidkanten oder -messer aufweist, um Späne abzuheben

Es kommt gemäss Erfindung vorzugsweise Werkzeuge 20 zum Einsatz, die speziell für das spanabhebende Bearbeiten von gehärteten Metallen ausgelegt ist.

Die zur Spanerzeugung oder -abhebung notwendige Bearbeitungsbewegung wird durch Rotation des Werkzeugs 20 gegenüber der vorgefertigten Zahnflanke 11 erzeugt. Die zur Formgebung notwendige Vorschubbewegung (in Richtung der Vektoren E) wird durch relative Bewegung des Werkzeuges 20 in Bezug auf die Zahnflanke 11 erzeugt. Die NC-gesteuerten Achsen der Machine 100 sorgen für diese relative Bewegung.

Das Werkzeug 20 kann sich im Gleichlauf oder im Gegenlauf befinden. Im Gleichlauf bewegt/bewegen sich die Schneide/n des rotierenden Werkzeugs 20, oder die mit schleifendem Material belegte Umfangsfläche des Werkzeugs 20 im Eingriffsbereich in Richtung des Vektors E der Vorschubbewegung. Im Gegenlauf bewegt/bewegen sie sich im Eingriffsbereich gegen die Richtung des Vektors E der Vorschubbewegung.

Gemäss Erfindung kommt ein rotatorisch angetriebenes, rotationssymmetrisches Werkzeug 20 zum Einsatz. Hierbei ist die Werkzeugachse WA mehrachsig in Bezug zum vorgefertigten und gehärteten Werkstück K2 bewegbar. Es ist eine entsprechende Steuerung (vorzugsweise eine NC-Steuerung S) zur Kopplung der entsprechenden Achsbewegungen vorgesehen. Dadurch wird das Werkzeug 20 entlang programmierten Bewegungsbahnen geführt.

FIG. 12 zeigt eine perspektivische Ansicht einer Portalmaschine 100, auf der die Erfindung zum Einsatz kommen kann. Diese Maschine 100 ist speziell zum Feinnachbearbeiten von Zahnrädern mit grossem Modul ausgelegt. Das nachzubearbeitende Zahnrad (nicht gezeigt) wird auf einem Werkstücktisch positioniert. Die Maschine 100 weist 5 NC-gesteuerte Achsen auf. Ausserdem umfasst sie eine Spindel 22 mit dem Werkzeug 20, das sich um eine zusätzliche Werkzeugachse WA dreht. Bei der gezeigten Momentaufnahme in Fig. 12 steht die Werkzeugachse WA senkrecht. Die Werkzeugspindel 22 kann um eine horizontale Achse gedreht und parallel zu einer vertikalen Achse nach oben und unten verschoben werden. Die Maschine 100 verfügt über drei Linearachsen (durch gerade Doppelpfeile angedeutet) und eine erste Rotationsachse des Drehtischs 101. Weiterhin kann über eine Kegelscheibe 23 durch eine Drehbewegung eine Schwenkung der Spindel 22 erfolgen.

### Bezugszeichenliste:

- Zahnrad: 10
- Zahnflanke: 11
- Zahnfuss: 12
- Zahnkopf: 13
- Übergang zum Zahnfussbereich: 14
- Schnittlinie: 15
- Flankenlinie vor der Nachbearbeitung: 16
- Übergangsmarker: 17
- Zahnfussbereich: 18

- rotationssymmetrisches Werkzeug: 20
- Zylinderförmiges Werkzeug: 20.1
- Kegelstumpfförmiges Werkzeug: 20.2
- Erzeugende: 21
- Werkzeugspindel: 22
- Kegelscheibe: 23

- Maschine: 100

- Abstände: A
- Balligkeit: B
- Vektorenschar (Bewegungsvektoren), die:
- die Erzeugungsbewegung /:
- Erzeugungsbewegungsbahnen repräsentiert: E
- Kreuzende Vektoren: E*
- Höhe: H1
- Effektiv wirksame Länge: L1
- Polygonenzug: P
- Rotation um WA: R1
- Radius: R
- NC-Steuerung: S
- Motor: M
- Werkzeugachse: WA
- Ausrichtungswinkel: W2
- Spiegelebene: S1-S1

## Patentansprüche

1. Verfahren zur Hart-Feinbearbeitung einer vorgefertigten Zahnflanke (11) eines Zahnrades (10) mittels einer Maschine (100), die mindestens fünf koordiniert gesteuerte Achsen und eine zusätzliche Werkzeugachse (WA) aufweist, **gekennzeichnet durch** die Schritte:
- Antreiben eines rotationssymmetrischen Werkzeugs (20; 20.1, 20.2), um es in eine Rotation (R1) um die Werkzeugachse (WA) zu versetzen,
- Ansteuern einer oder mehrerer der fünf koordiniert gesteuerten Achsen so, dass mindestens ein kurzer geradliniger Abschnitt der Mantellinie des Werkzeugs (20; 20.1, 20.2) in einer Erzeugungsbewegung tangential in mehreren Spuren entlang der Zahnflanke (11) geführt wird während das Werkzeug (20; 20.1, 20.2) **durch** die Rotation (R1) um die Werkzeugachse (WA) an der vorgefertigten Zahnflanke (11) Material abhebt, wobei die Erzeugungsbewegung vorgegebenen Bewegungsvektoren (E) folgt,
**dadurch gekennzeichnet, dass** die Erzeugungsbewegung den Bewegungsvektoren (E) folgt, die leicht gekrümmt, vorzugsweise parallel zueinander verlaufen, wobei diese Bewegungsvektoren (E) virtuellen Messerspuren, vorzugsweise Wälz-Iso-Linien, eines Messerkopfs entsprechen oder angenähert sind, die beim Erzeugen der entsprechenden Zahnflanke (11) mittels Wälzfräsen entstehen würden.

2. Verfahren nach Anspruch 1, **dadurch gekennzeichnet, dass** eine Steuerung (S) der Maschine (100) Steuersignale erzeugt, um das Werkzeug (20; 20.1, 20.2) tangential an der zu bearbeitenden Fläche der Zahnflanke anzustellen und um die Erzeugungsbewegung auszuführen.

3. Verfahren nach Anspruch 1 oder 2, **dadurch gekennzeichnet, dass** es sich bei dem Werkzeug um ein Werkzeug (20.1) mit zylinderförmigem Grundkörper handelt.

4. Verfahren nach Anspruch 1 oder 2, **dadurch gekennzeichnet, dass** es sich bei dem Werkzeug um ein Werkzeug (20.2) mit kegelstumpfförmigem Grundkörper handelt und dass das tangentiale Führen des Werkzeugs (20.2) entlang der Zahnflanke (11) durch einen Anstellwinkel der Werkzeugachse (WA) erreicht wird, der einem Kegelwinkel des Werkzeugs (20.2) entspricht.

## Claims

1. Method for hard fine machining of a pre-manufactured tooth flank (11) of a gear wheel (10) using a machine (100) comprising at least five axes controlled in coordination and an additional tool axis (WA), comprising the steps:
- driving a rotationally symmetrical tool (20; 20.1, 20.2) in order to set it in a rotation (R1) about the tool axis (WA),
- controlling one or more of the five axes controlled in coordination such that at least one short rectilinear section of the surface line of the tool (20; 20.1, 20.2) is guided in a generation motion tangentially along the tooth flank (11) in several traces, while the tool (20; 20.1, 20.2) scrapes off material from the pre-manufactured tooth flank (11) due to the rotation (R1) about the tool axis (WA), wherein the generation motion follows predetermined motion vectors (E),
**characterized in that** the generation motion follows the motion vectors (E), which extend slightly curvilinear, preferably parallel with respect to each other, wherein these motion vectors (E) correspond or are approximated to virtual cutter traces, preferably rolling countour lines, of a cutter head, which cutter taces would be formed when generating the corresponding tooth flank (11) by means of hobbing.

2. Method according to claim 1, **characterized in that** a control (S) of the machine (100) generates control signals in order to engage the tool (20; 20.1, 20.2) tangentially to the surface to be machined of the tooth flank and to carry out the generation motion.

3. Method according to claim 1 or 2, **characterized in that** the tool (20; 20.1, 20.2) concerns a tool (20.1) having a cylindrical base body.

4. Method according to claim 1 or 2, **characterized in that** the tool (20; 20.1, 20.2) concerns a tool (20.2) having a truncated-cone-shaped base body and **in that** the tangential guiding of the tool (20.2) along the tooth flank (11) is achieved using a blade angle of the tool axis (WA) corresponding to a cone angle of the tool (20.2).

## Revendications

1. Procédé de traitement précis et dur d'un flanc de dent (11) préfabriqué d'une roue dentée (10) à l'aide d'une machine (100) qui présente au moins cinq axes commandés de façon coordonnée et un axe d'outil supplémentaire (WA), **caractérisé par** les étapes consistant à :
- entraîner un outil symétrique en rotation (20 ; 20.1, 20.2) pour le déplacer en rotation (R1) autour de l'axe d'outil (WA),
- commander un ou plusieurs des cinq axes commandés de façon coordonnée, de façon à ce qu'au moins une petite section linéaire de la génératrice de l'outil (20 ; 20.1, 20.2) soit entraînée dans un mouvement de production de façon tangentielle dans plusieurs tracés le long du flanc de dent (11), pendant que l'outil (20 ; 20.1, 20.2) de par la rotation (R1) autour de l'axe d'outil (WA) enlève du matériau au niveau du flanc de dent (11) préfabriqué, le mouvement de production suivant les vecteurs de mouvement (E) prédéfinis,
**caractérisé en ce que** le mouvement de production suit les vecteurs de mouvement (E), lesquels s'étendent légèrement courbés, de préférence parallèlement entre eux, ces vecteurs de mouvement (E) correspondant à ou se rapprochant de tracés de couteaux virtuelles, de préférence des lignes de rouleau, d'une tête de lame qui sont réalisées lors de la fabrication du flanc de dent approprié (11) au moyen d'un fraisage par développante.

2. Procédé selon la revendication 1, **caractérisé en ce qu'**une commande (S) de la machine (100) émet des signaux de commande pour régler l'outil (20 ; 20.1, 20.2) de façon tangentielle au niveau des surfaces à usiner du flanc de dent ainsi que pour effectuer le mouvement de production.

3. Procédé selon la revendication 1 ou 2, **caractérisé en ce que** l'outil est un outil (20.1) avec un corps de base cylindrique.

4. Procédé selon la revendication 1 ou 2, **caractérisé en ce que** l'outil est un outil (20.2) avec un corps de base tronconique et **en ce que** l'amenée tangentielle de l'outil (20.2) se fait le long du flanc de dent (11) par un angle de réglage de l'axe d'outil (WA), angle qui correspond à l'angle de cône de l'outil (20.2).
